(19) **Europäisches Patentamt**
**European Patent Office**
**Office européen des brevets**

(11) **EP 4 716 163 A2**

(12) **EUROPEAN PATENT APPLICATION**

(43) Date of publication:
**25.03.2026  Bulletin 2026/13**

(21) Application number: **25202756.0**

(22) Date of filing: **17.09.2025**

(51) International Patent Classification (IPC):
**H04L 25/02** (2006.01)      **H04L 25/06** (2006.01)

(52) Cooperative Patent Classification (CPC):
**H04L 25/0222; H04L 25/067;** H04L 25/022;
H04L 25/0256

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **20.09.2024  KR 20240127538**

(71) Applicant: **Samsung Electronics Co., Ltd.**
**Suwon-si, Gyeonggi-do 16677 (KR)**

(72) Inventors:
• **KIM, Joohan**
  **16677 Suwon-si (KR)**
• **MIN, Kyoungbaek**
  **16677 Suwon-si (KR)**
• **JUNG, Youngseok**
  **16677 Suwon-si (KR)**

(74) Representative: **Marks & Clerk LLP**
**15 Fetter Lane**
**London EC4A 1BW (GB)**

(54) **WIRELESS COMMUNICATION DEVICE FOR CALCULATING LOG-LIKELIHOOD RATIO AND OPERATION METHOD OF THE WIRELESS COMMUNICATION DEVICE**

(57)     A wireless communication device includes a radio-frequency integrated circuit (RFIC), one or more processors including processing circuitry, and a memory storing instructions. The instructions, when executed by the one or more processors individually or collectively, cause the wireless communication device to receive, via the RFIC, a reception signal including a plurality of subcarriers, and calculate a first log-likelihood ratio (LLR) based on a frequency domain. The plurality of subcarriers include a first subcarrier and a second subcarrier adjacent to the first subcarrier. The calculation of the first LLR includes to measure a channel variation between the first subcarrier and the second subcarrier, determine a second linear detection matrix of the second subcarrier, based on the channel variation, and calculate the first LLR based on at least one of a first linear detection matrix of the first subcarrier and the second linear detection matrix. The first subcarrier is a pivot subcarrier.

## FIG. 5

DETECT CHANNEL VARIATION — S101

DETERMINE TO UPDATE MMSE WEIGHT MATRIX OR TO SKIP UPDATE THEREOF — S103

GENERATE WEIGHT MATRIX — S105

CALCULATE LLR — S107

**Description**

BACKGROUND

1. Field

The present disclosure relates generally to wireless communication devices, and more particularly, to a wireless communication device including a multiple-input and multiple-output (MIMO) detector having low power consumption, and an operation method of the wireless communication device.

2. Description of Related Art

Recently, along with rapid advancement of wireless and/or wired communication technologies and smart device-related technologies, receivers in wireless communication systems may need to provide a relatively high decoding accuracy of signals received by the receivers.

Receivers may refer to devices that may receive encoded signals from transmitters and/or may obtain information transmitted by transmitters by decoding reception signals. To decode the reception signals, receivers may generate log-likelihood ratios. In the calculation of log-likelihood ratios, as modulation orders of reception signals and/or the number of layers of reception signals increase, the complexity of the calculation of log-likelihood ratios may increase. Therefore, there is a need for reducing the complexity of the calculation of a log-likelihood ratio while potentially preventing deterioration of a performance of the receiver.

SUMMARY

One or more example embodiments of the present disclosure provide for reducing the complexity and power consumption in an operation of obtaining a log-likelihood ratio for decoding a reception signal in a wireless communication system.

According to an aspect of the present disclosure, a wireless communication device includes a radio-frequency integrated circuit (RFIC), one or more processors including processing circuitry, and a memory storing instructions. The instructions, when executed by the one or more processors individually or collectively, cause the wireless communication device to receive, via the RFIC, a reception signal including a plurality of subcarriers, and calculate a first log-likelihood ratio (LLR) based on a frequency domain. The plurality of subcarriers include a first subcarrier and a second subcarrier adjacent to the first subcarrier. The calculation of the first LLR includes to measure a channel variation between the first subcarrier and the second subcarrier, determine a second linear detection matrix of the second subcarrier, based on the channel variation, and calculate the first LLR based on at least one of a first linear detection matrix of the first subcarrier and the second linear detection matrix. The first subcarrier is a pivot subcarrier.

According to an aspect of the present disclosure, an operation method of a wireless communication device includes receiving a reception signal including a plurality of subcarriers, calculating a first LLR being based on a frequency domain, and decoding the reception signal using the first LLR. The plurality of subcarriers include a first subcarrier and a second subcarrier adjacent to the first subcarrier. The calculating of the first LLR includes measuring a channel variation between the first subcarrier and the second subcarrier, determining a second linear detection matrix of the second subcarrier, and calculating the first LLR based on at least one of a first linear detection matrix of the first subcarrier and the second linear detection matrix. The first subcarrier is a pivot subcarrier.

According to an aspect of the present disclosure, a wireless communication device includes an RFIC, one or more processors including processing circuitry, and a memory storing instructions. The instructions, when executed by the one or more processors individually or collectively, cause the wireless communication device to receive, via the RFIC, a reception signal including a plurality of subcarriers, and calculate a first LLR based on a time domain. The plurality of subcarriers include a first subcarrier and a second subcarrier adjacent to the first subcarrier. The calculation of the first LLR includes to measure a root mean square (RMS) delay spread of the reception signal, compare the RMS delay spread with one or more thresholds, calculate, for each subcarrier of the plurality of subcarriers, a linear detection matrix, based on a result of the comparison, and calculate the first LLR based on the linear detection matrices of the plurality of subcarriers.

At least some of the above and other features of the invention are set out in the claims.

Additional aspects may be set forth in part in the description which follows and, in part, may be apparent from the description, and/or may be learned by practice of the presented embodiments.

BRIEF DESCRIPTION OF THE DRAWINGS

The above and other aspects, features, and advantages of certain embodiments of the present disclosure may be more apparent from the following description taken in conjunction with the accompanying drawings, in which:

FIG. 1 is a block diagram illustrating a wireless communication system, according to an embodiment;

FIG. 2 is a block diagram illustrating a wireless communication device, according to an embodiment;

FIG. 3 is a block diagram illustrating a low power consumption log-likelihood ratio (LLR) calculation module, according to an embodiment;

FIG. 4 is a block diagram illustrating a low power consumption LLR calculation module, according to an embodiment;

FIG. 5 illustrates an operation procedure, performed by a wireless communication device, of calculating an LLR, according to an embodiment;

FIG. 6 illustrates an operation procedure, performed by a wireless communication device, of calculating a power variation of a reception signal, according to an embodiment;

FIG. 7 illustrates an operation procedure, performed by a wireless communication device, of determining whether to update a weight matrix of a subcarrier, based on a channel variation, according to an embodiment;

FIG. 8 is a diagram illustrating an embodiment in which an adjacent subcarrier having an updated weight matrix becomes a new pivot subcarrier, according to an embodiment;

FIGS. 9A and 9B each illustrate an embodiment in which a wireless communication device determines whether to update a weight matrix of a subcarrier in the time domain, according to an embodiment;

FIG. 10 illustrates an operation procedure, performed by a wireless communication device, of calculating an LLR, according to an embodiment;

FIG. 11 is a diagram illustrating the number of constellation points used for LLR calculation, according to an embodiment;

FIG. 12 is a diagram illustrating an operation of updating a weight matrix or skipping an update of a weight matrix, according to an embodiment;

FIG. 13 illustrates an example of a channel impulse response in the time domain, according to an embodiment;

FIG. 14 illustrates a ratio of skipping, by a wireless communication device, the generation of a minimum mean square error (MMSE) weight matrix, according to an embodiment;

FIGS. 15A and 15B illustrate a block error ratio (BLER) performance in which a wireless communication device, according to an embodiment, skips an update of a weight matrix according to a channel variation in the frequency domain;

FIG. 16 illustrates an operation procedure, performed by a wireless communication device, of calculating an LLR, according to an embodiment; and

FIG. 17 is a block diagram illustrating a wireless communication device, according to an embodiment.

DETAILED DESCRIPTION

The following description with reference to the accompanying drawings is provided to assist in a comprehensive understanding of embodiments of the present disclosure defined by the claims and their equivalents. Various specific details are included to assist in understanding, however, these details are considered to be examples only. Therefore, those of ordinary skill in the art may recognize that various changes and modifications of the embodiments described herein may be made without departing from the scope of the disclosure. In addition, descriptions of well-known functions and structures are omitted for clarity and conciseness.

With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wired), wirelessly, or via a third element.

It is to be understood that when an element or layer is referred to as being "over," "above," "on," "below," "under," "beneath," "connected to" or "coupled to" another element or layer, it may be directly over, above, on, below, under, beneath, connected or coupled to the other element or layer or intervening elements or layers may be present. In contrast, when an element is referred to as being "directly over," "directly above," "directly on," "directly below," "directly under," "directly beneath," "directly connected to" or "directly coupled to" another element or layer, there are no intervening elements or layers present.

The terms "first," "second," third" may be used to describe various elements, however, the elements are not limited by the terms and a "first element" may be referred to as a "second element". Alternatively or additionally, the terms "first", "second", "third", or the like may be used to distinguish components from each other and do not limit the present disclosure. For example, the terms "first", "second", "third", or the like may not necessarily involve an order or a numerical meaning of any form.

Reference throughout the present disclosure to "one embodiment," "an embodiment," "an example embodiment," or similar language may indicate that a particular feature, structure, or characteristic described in connection with the indicated embodiment is included in at least one embodiment of the present solution. Thus, the phrases "in one embodiment", "in an embodiment," "in an example embodiment," and similar language throughout this disclosure may, but do not necessarily, all refer to the same embodiment. The embodiments described herein are example embodiments, and thus, the disclosure is not limited thereto and may be realized in various other forms.

It is to be understood that the specific order or hierarchy of blocks in the processes/flowcharts disclosed are an illustration of example approaches. Based upon design preferences, it is understood that the specific order or hierarchy of blocks in the processes/flowcharts may be rearranged. Further, some blocks may be combined or omitted. The accompanying claims present elements of the various blocks in a sample order, and are not meant to be limited to the specific order or hierarchy presented.

The embodiments herein may be described and illustrated in terms of blocks, as shown in the drawings, which carry out a described function or functions. These blocks, which may be referred to herein as units, components, or modules, or the like, or by names such as device, logic, circuit, controller, counter, comparator, generator, converter, or the like, may be physically implemented by analog and/or digital circuits including one or more of a logic gate, an integrated circuit, a microprocessor, a microcontroller, a memory circuit, a passive electronic component, an active electronic component, an optical component, or the like.

In the present disclosure, the articles "a" and "an" are intended to include one or more items, and may be used interchangeably with "one or more." Where only one item is intended, the term "one" or similar language is used. For example, the term "a processor" may refer to either a single processor or multiple processors. When a processor is described as carrying out an operation and the processor is referred to perform an additional operation, the multiple operations may be executed by either a single processor or any one or a combination of multiple processors.

Hereinafter, various embodiments of the present disclosure are described with reference to the accompanying drawings.

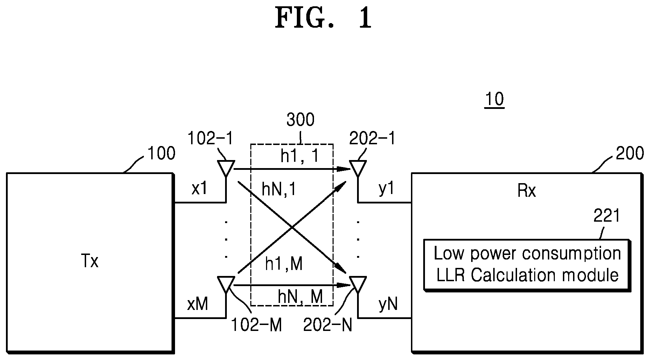

FIG. 1 is a block diagram illustrating a wireless communication system, according to the present disclosure.

FIG. 1 is a block diagram illustrating a communication system, according to an embodiment. Referring to FIG. 1, a communication system 10 may include a transmitter 100 and a receiver 200, which may communicate with each other via a multiple-input and multiple-output (MIMO) channel 300.

The communication system 10 may include any communication system including the MIMO channel 300. In some embodiments, the communication system 10 may include, as a non-limiting example, a wireless communication system, such as a 5th-generation wireless (5G) system, a Long-Term Evolution (LTE) system, or a Wireless-Fidelity (WiFi) system. In some embodiments, the communication system 10 may include a wired communication system, such as, but not limited to, a storage system or a network system. Hereinafter, the communication system 10 is described by mainly referring to a wireless communication system. However, aspects of the present disclosure are not limited thereto. Notably, the aspects presented herein may be employed with any communication system that comprises a MIMO channel.

In an embodiment, the transmitter 100 may include a base station and/or a component that is included in the base station. The base station may refer to a fixed station communicating with a terminal and/or another base station and may transmit and/or receive data and/or control information by communicating with a terminal and/or another base station. The base station may also be referred to as a Node B, an evolved-Node B (eNB), a base transceiver system (BTS), an access point (AP), or the like.

In an embodiment, the receiver 200 may include a terminal and/or a component that is included in the terminal. For example, the receiver 200 may be and/or may include a modem chip. The terminal, which may be a wireless communication device, may refer to various devices capable of transmitting and/or receiving data and/or control information by communicating with the transmitter 100. For example, the terminal may be referred to as a user equipment (UE), a mobile station, a mobile terminal, a user terminal, a subscribe station, a wireless device, a portable device, or the like.

A wireless communication network between the transmitter 100 and the receiver 200 may support a relatively large number of users to communicate with each other by sharing available network resources. For example, in the wireless communication network, information may be transferred by various methods, such as, but not limited to, code division multiple access (CDMA), frequency division multiple access (FDMA), time division multiple access (TDMA), orthogonal frequency division multiple access (OFDMA), single carrier frequency division multiple access (SC-FDMA), or the like.

The transmitter 100 may include a plurality of transmission antennas (e.g., a first transmission antenna 102-1 to an M-th transmission antenna 102-M, where M is a positive integer greater than one (1)) and may respectively transmit a plurality of transmission symbols (e.g., a first symbol $x_1$ to an M-th symbol $x_M$) via the plurality of first to M-th transmission antennas 102-1 to 102-M. In addition, the receiver 200 may include a plurality of reception antennas (e.g., a first reception antenna 202-1 to an N-th reception antenna 202-N, where N is a positive integer greater than one (1)) and may respectively receive a plurality of reception symbols (e.g., a first reception symbol $y_1$ to an N-th reception symbol $y_N$) via the plurality of first to N-th reception antennas 202-1 to 202-N.

For example, when a symbol vector transmitted by the transmitter 100 is represented by $x = [x_1, \ldots, x_M]^T$, a symbol vector y received by the receiver 200 may be represented as an equation similar to Equation 1.

$$y = Hx + n = \begin{pmatrix} h_{1,1} & \cdots & h_{1,M} \\ \vdots & \ddots & \vdots \\ h_{N,1} & \cdots & h_{N,M} \end{pmatrix} \begin{pmatrix} x_1 \\ \vdots \\ x_M \end{pmatrix} + \begin{pmatrix} n_1 \\ \vdots \\ n_N \end{pmatrix} \qquad \text{[Equation 1]}$$

Referring to Equation 1, $h_{i,j}$ may represent an effective channel gain between a j-th transmission antenna (or transmission layer) 102-j (where j is a positive integer from one (1) to M) and an i-th reception antenna 202-i (where i is a positive integer from one (1) to N), and $x_j$ may represent a transmission symbol from the j-th transmission antenna (or transmission layer) 102-j. H may represent a channel matrix of the frequency domain for a subcarrier.

The transmission symbol $x_j$ may be a value of a constellation point from among a plurality of signal constellation points. A constellation point may refer to a point on a complex plane used for mapping a transmission signal. The number and positions of constellation points on the complex plane may vary with a modulation method. A particular modulation method may be determined by a modulation order. That is, a modulation method of a transmission signal may be determined based on a modulation order, and when the modulation order increases, the number of constellation points according to the modulation method corresponding thereto may increase. For example, when the transmitter 100 modulates a transmission signal by a quadrature phase shift keying (QPSK) method, one (1) constellation point may be located in each quadrant of the complex plane. That is, four (4) constellation points may be used to modulate the transmission signal.

The transmitter 100, which may modulate a transmission signal by the QPSK method, may map the transmission signal to one of the four (4) constellation points and may transmit the transmission signal to the receiver 200. For convenience of description, although descriptions are made herein based on a modulation method of the transmitter 100 being the QPSK method, it is to be understood that the modulation method of the transmitter 100 is not limited thereto. For example, the transmission signal may be modulated by various other modulation methods such as, but not limited to, 16-bit/symbol quadrature amplitude modulation (16QAM), 64-bit/symbol quadrature amplitude modulation (64QAM), 256-bit/symbol quadrature amplitude modulation (256QAM), 1024-bit/symbol quadrature amplitude modulation (1024QAM), or the like.

Continuing to refer to Equation 1, $n_i$ may represent additive white Gaussian noise (AWGN) from an i-th reception antenna 202-i and may have power (or a variance) of $\sigma^2$. n may represent a matrix of the AWGN. An interference signal may be included in the AWGN. For example, in the communication system 10, noise of a reception antenna 202 may be taken into account together with an influence of an interference signal. In this case, although variances of the AWGN for the respective plurality of first to N-th reception antennas 202-1 to 202-N may be different and spatially correlated, it may be assumed hereinafter that pieces of power of the AWGN for the respective reception antennas may be equal and spatially uncorrelated. For example, the AWGN may be substantially similar to and/or the same as noise having undergone the application of a whitening filter.

The receiver 200, according to the present disclosure, may include log-likelihood ratio (LLR) calculation module. Specifically, the receiver 200 may include a low power consumption log-likelihood ratio (LLR) calculation module 221. An LLR calculation module may be referred to as a MIMO detector. The low power consumption LLR calculation module 221, according to the present disclosure, may calculate an LLR. The term "low power consumption LLR calculation module" may refer to an LLR calculation module that implements the methods described herein to reduce power consumption (e.g., by reducing the number of weight matrices calculated). Accordingly, "low power consumption" may refer to a reduction in power consumption relative to other LLR calculation modules that do not implement the methods described herein. The term "low power consumption" therefore need not imply any particular level of power consumption. For the avoidance of any doubt, the term "low power consumption LLR calculation module" may be replaced herein with the more general term "LLR calculation module".

The receiver 200 may decode a reception signal based on the LLR. For example, when the LLR is a positive number, the receiver 200 may decode a symbol corresponding thereto as '1' (e.g., one (1), logic high value), and when the LLR is a negative number, the receiver 200 may decode a symbol corresponding thereto as '0' (e.g., zero (0), logic low value). However, the present disclosure is not limited in this regard, and the receiver 200 may decode a symbol corresponding to '0' when the LLR is a positive number, and to a symbol corresponding to '1' when the LLR is a negative number. In an embodiment, the LLR may refer to a probability that the reception signal is decoded as "0" or '1'.

In a MIMO system, when the receiver 200 uses a maximum likelihood (ML) detection method, which may refer to a non-linear detection method, to calculate the LLR, the number of antennas used for transmission and/or reception and/or a modulation order may increase, and as such, the complexity of the LLR calculation may also increase. When the receiver 200 uses a linear detection method (e.g., minimum mean square error (MMSE) or zero forcing (ZF)) that may have a relatively low complexity, the complexity of the LLR calculation may decrease, however, detection performance may deteriorate. For example, when the receiver 200 uses a linear detection method, block error ratio (BLER) performance may be reduced, when compared to a related receiver.

Although the low power consumption LLR calculation module 221, according to the present disclosure, calculates an LLR based on a linear detection method, the low power consumption LLR calculation module 221 may reduce the number of times of updating a weight matrix, based on a power variation of a reception signal, and may potentially reduce and/or prevent performance deterioration while reducing the complexity of LLR calculation, when compared to a related receiver. A wireless communication device and/or a modem chip, which may include the low power consumption LLR calculation module 221, according to an embodiment, may reduce the complexity and/or power consumption of MIMO detection by calculating linear detection matrices of some of subcarriers of the reception signal.

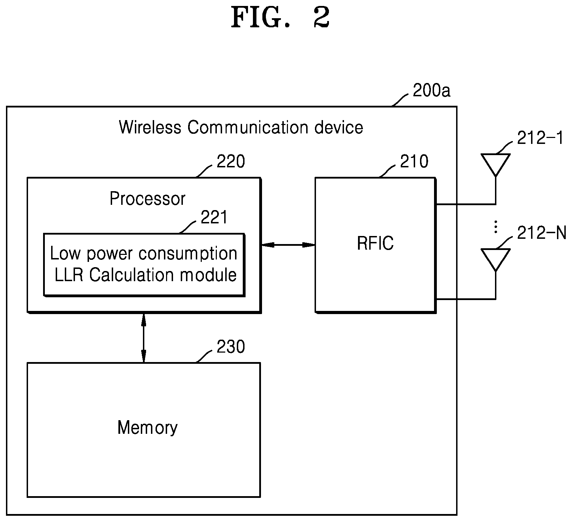

FIG. 2 is a block diagram illustrating a wireless communication device, according to an embodiment.

A wireless communication device 200a of FIG. 2 may include and/or may be similar in many respects to the receiver 200 described above with reference to FIG. 1, and may include additional features not mentioned above. Consequently, repeated descriptions of the wireless communication device 200a described above with reference to FIG. 1 may be omitted for the sake of brevity.

Referring to FIG. 2, the wireless communication device 200a may include radio-frequency integrated circuit (RFIC) 210, a processor 220, a memory 230, and a plurality of antennas (e.g., a first antenna 212-1 to N-th antenna 212-N, where N is a positive integer greater than one (1)).

The number and arrangement of components of the wireless communication device 200a shown in FIG. 2 are provided as an example. In practice, there may be additional components, fewer components, different components, or differently arranged components than those shown in FIG. 2. Furthermore, two or more components shown in FIG. 2 may be implemented within a single component, or a single component shown in FIG. 2 may be implemented as multiple, distributed components. Alternatively or additionally, a set of (one or more) components shown in FIG. 2 may be integrated with each other, and/or may be implemented as an integrated circuit, as software, and/or a combination of circuits and software.

For example, in an embodiment, the RFIC 210 and the processor may 220 be included in one modem chip. The wireless communication device 200a, according to the present disclosure, may include a modem chip, and depending on embodiments, the modem chip may perform operations performed by the wireless communication device 200a.

The wireless communication device 200a may access a wireless communication system (e.g., the wireless communication system 10 of FIG. 1) by transmitting and/or receiving signals (which hereinafter may be referred to as data) via at least one of the plurality of first to N-th antennas 212-1 to 212-N.

The RFIC 210 may transmit and/or receive symbol vectors (which hereinafter may be referred to as data) via at least one of the plurality of first to N-th antennas 212-1 to 212-N. That is, at least some of the plurality of first to N-th antennas 212-1 to 212-N may each correspond to a transmission antenna. The transmission antenna may transmit a signal to an external device (e.g., another wireless communication device and/or a base station (BS)) rather than to the wireless communication device 200a. The remaining antennas from among the plurality of first to N-th antennas 212-1 to 212-N may each correspond to a reception antenna. The reception antenna may receive a radio signal from the external device and/or the base station (BS).

The processor 220 may control all operations of the wireless communication device 200a. For example, the processor 220 may include a central processing unit (CPU). The processor 220 may include one processor core (e.g., a single core) or a plurality of processor cores (e.g., multi-cores). The processor 220 may process and/or execute programs and/or data stored in the memory 230. In an embodiment, the processor 220 may execute programs stored in the memory 230, thereby controlling various functions of the wireless communication device 200a and/or performing various operations.

The processor 220, according to the present disclosure, may include an LLR calculation module. Specifically, the processor 220, according to the present disclosure, may include a low power consumption LLR calculation module 221. The low power consumption LLR calculation module 221 may include processing circuitry, such as hardware including a logic circuit, a hardware-software combination, such as a processor configured to execute software, or a combination thereof. For example, the processing circuitry may include, but is not limited to, an arithmetic logic unit (ALU), a digital signal processor (DSP), a microcomputer, a field-programmable gate array (FPGA), a microprocessor, an application-specific integrated circuit (ASIC), or the like. For example, an FPGA may be used to implement custom logic that may include the functionality of the low power consumption LLR calculation module 221. As another example, the processor 220, in combination with the memory 230, may be used to execute one or more instructions to perform the functionality of the low power consumption LLR calculation module 221. Alternatively or additionally, at least a portion of the low power consumption LLR calculation module 221 may be incorporated into a processor and/or implemented as instructions to be executed by a processor.

The wireless communication device 200a, according to an embodiment, may include the RFIC 210 and the processor 220 configured to receive a reception signal via the RFIC 210. The wireless communication device 200a may include a modem chip. When an LLR is calculated based on the frequency domain, the processor 220 may measure a channel variation between a first subcarrier and a second subcarrier of a reception signal. The processor 220 may determine a first linear detection matrix of the first subcarrier as a second linear detection matrix of the second subcarrier and/or calculate the second linear detection matrix, based on the channel variation. The processor 220 may calculate the LLR based on at least one of the first linear detection matrix and the second linear detection matrix. The first subcarrier may be a pivot subcarrier, and the second subcarrier may be adjacent to the first subcarrier.

Alternatively or additionally, when an LLR is calculated based on the time domain, the processor 220 may be configured to measure a root mean square (RMS) delay spread of a reception signal and compare the RMS delay spread with one or more threshold values. The processor 220 may calculate linear detection matrices every N subcarriers, according to a comparison result. The processor 220 may be configured to calculate the LLR based on the calculated linear detection matrices.

As used herein, a linear detection matrix may be referred to as a linear detector and/or a weight matrix. The linear detection matrix may include, but not be limited to, a minimum mean square error (MMSE) weight matrix, a zero forcing (ZF) weight matrix, a QR (Q represents an orthogonal matrix, and R represents an upper triangular matrix) decomposition (QRD) weight matrix, or the like.

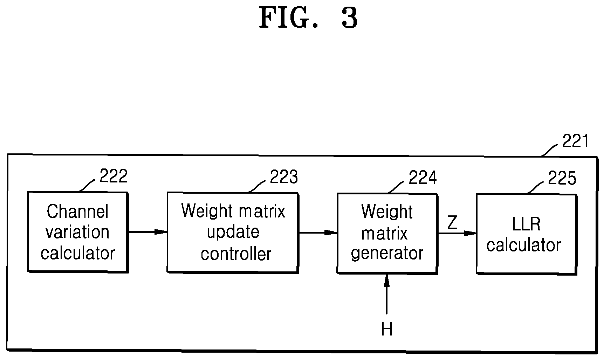

FIG. 3 is a block diagram illustrating a low power consumption LLR calculation module, according to an embodiment.

The low power consumption LLR calculation module 221 of FIG. 3 may include and/or may be similar in many respects to the low power consumption LLR calculation module 221 described above with reference to FIGS. 1 and 2, and may include additional features not mentioned above. Consequently, repeated descriptions of the low power consumption LLR calculation module 221 described above with reference to FIGS. 1 and 2 may be omitted for the sake of brevity.

Referring to FIG. 3, the low power consumption LLR calculation module 221 may include a channel variation calculator 222, a weight matrix update controller 223, a weight matrix generator 224, and an LLR calculator 225.

As described above, the low power consumption LLR calculation module 221 may include processing circuitry, such as hardware including a logic circuit, a hardware-software combination, such as a processor configured to execute software, or a combination thereof. For convenience of description, although FIG. 3 illustrates that the low power consumption LLR calculation module 221 includes separate components, the present disclosure is not limited thereto, and each component may include a piece of hardware and/or a combination of hardware and software.

According to an embodiment, to determine whether to update a weight matrix for a subcarrier, the channel variation calculator 222 may calculate a channel variation for the subcarrier in the frequency domain. That is, the channel variation calculator 222 may calculate a channel (e.g., estimate a channel) of a subcarrier. Calculating a channel of a subcarrier may comprise calculating a gain and/or phase of the subcarrier. For example, the channel variation calculator 222 may calculate respective channels of a pivot subcarrier and an adjacent subcarrier. In addition, the channel variation calculator 222 may calculate a difference between the channels. That is, the channel variation calculator 222 may calculate a channel variation based on a difference between the channel of the pivot subcarrier and the channel of the adjacent subcarrier. The pivot subcarrier may be a reference subcarrier for determining the channel variation and to determine whether to calculate (and/or update) a weight matrix for the adjacent subcarrier. A pivot subcarrier may also be referred to as a reference subcarrier. The adjacent subcarrier may be adjacent to the pivot subcarrier in terms of index. Each index may refer to a particular frequency of the subcarrier.

According to an embodiment, to determine whether to update a weight matrix for a subcarrier, the channel variation calculator 222 may measure an RMS delay spread of a reception signal in the time domain. The channel variation calculator 222 may indirectly determine a channel variation between subcarriers of the reception signal by measuring the RMS delay spread in the time domain. The RMS delay spread may include a maximum delay spread.

$$y_i = H_i x_i + n_i \qquad\qquad [\text{Equation 2}]$$

Referring to Equation 2, $y_i$ may represent a reception signal vector for a subcarrier i, $H_i$ may represent a channel matrix of the frequency domain for the subcarrier i, $x_i$ may represent a transmission signal vector for the subcarrier i, and i may represent a subcarrier index of the subcarrier.

The weight matrix update controller 223 may determine whether to update a linear detection matrix for a subcarrier of a reception signal. The reception signal according to the subcarrier index may be represented as an equation similar to Equation 2.

According to an embodiment, the weight matrix update controller 223 may determine whether to update a linear detection matrix for a subcarrier of the reception signal, based on a channel variation. When it is determined that an update is needed for a subcarrier of the reception signal, the weight matrix update controller 223 may transmit index information of the subcarrier to the weight matrix generator 224 to calculate a weight matrix of the subcarrier.

According to an embodiment, the weight matrix update controller 223 may determine whether to update a linear detection matrix for a subcarrier of the reception signal, based on an RMS delay spread. When it is determined that an update is needed for a subcarrier of the reception signal, the weight matrix update controller 223 may transmit index information of the subcarrier to the weight matrix generator 224 to calculate a weight matrix of the subcarrier. That is, the weight matrix update controller 223 may transmit, to the weight matrix generator 224, subcarrier index information for calculating weight matrices every N subcarriers. Hereinafter, descriptions are made by taking an MMSE weight matrix as an example for convenience. However, the present disclosure is not limited thereto. As described above, the weight matrix may include, but not be limited to, an MMSE weight matrix, a ZF weight matrix, a QRD weight matrix, or the like.

$$W_i = \left(H_i H_i^H + \sigma_n^2 I\right)^{-1} H_i^H \qquad \text{[Equation 3]}$$

Referring to Equation 3, W may represent a linear detection matrix, H may represent a channel matrix, I may represent a unit matrix, $\sigma_n^2$ may represent a noise variance, $H^H$ may represent a Hermitian transpose of the channel matrix H, and i may represent a subcarrier index.

The LLR calculator 225 may calculate an LLR based on an MMSE weight matrix. The calculated LLR may be used to decode a reception signal.

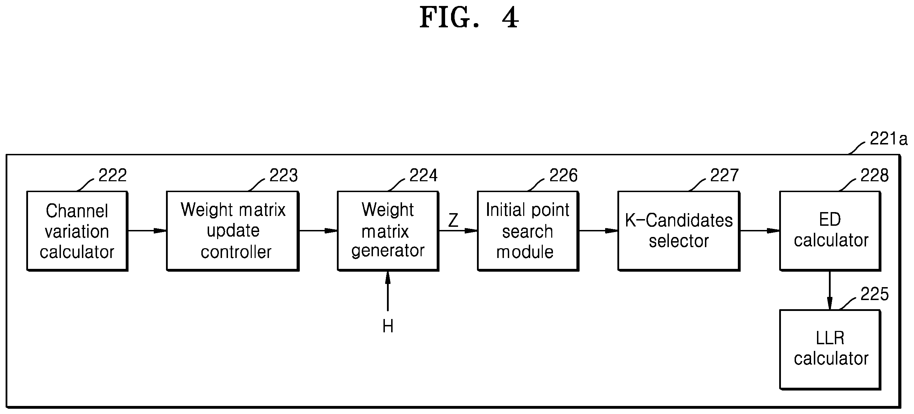

FIG. 4 is a block diagram illustrating a low power consumption LLR calculation module, according to an embodiment. A low power consumption LLR calculation module 221a of FIG. 4 may include and/or may be similar in many respects to the low power consumption LLR calculation module 221 described above with reference to FIGS. 1 to 3, and may include additional features not mentioned above. Furthermore, the channel variation calculator 222, the weight matrix update controller 223, the weight matrix generator 224, and the LLR calculator 225 of FIG. 4 may include and/or may be similar in many respects to the channel variation calculator 222, the weight matrix update controller 223, the weight matrix generator 224, and the LLR calculator 225 described above with reference to FIGS. 1 to 3, respectively, and may include additional features not mentioned above. Consequently, repeated descriptions of the low power consumption LLR calculation module 221a, and its components, described above with reference to FIGS. 1 to 3 may be omitted for the sake of brevity.

Referring to FIG. 4 together with FIG. 3, the low power consumption LLR calculation module 221a may include a channel variation calculator 222, a weight matrix update controller 223, a weight matrix generator 224, an initial point search module 226, a K-candidates selector 227, a Euclidean distance (ED) calculator 228, and an LLR calculator 225.

The initial point search module 226 may receive a weight matrix (e.g., an MMSE weight matrix) generated by the weight matrix generator 224. The initial point search module 226 may search for an initial point based on a weight matrix. The initial point search module 226 may search for an initial point and the search may be represented as an equation similar to Equation 4.

$$z_i = W_i y_i + W_i n_i \qquad \text{[Equation 4]}$$

Referring to Equation 4, z may present an initial point, W may present a weight matrix (e.g., an MMSE weight matrix), y may present a reception signal vector, n may present noise, and i may present a subcarrier index. As used herein, the initial point may be referred to as a reference symbol.

The K-candidates selector 227 may select K constellation points adjacent to the initial point, where K is a positive integer greater than zero (0). According to an embodiment, the K-candidates selector 227 may select K constellation points based on a signal-to-interference ratio (SIR). The ED calculator 228 may calculate EDs between K candidates selected by the K-candidates selector 227 and the initial point. The LLR calculator 225 may calculate an LLR based on the EDs calculated by the ED calculator 228.

According to an embodiment, the LLR calculator 225 may receive the number of constellation points (e.g., K) and the initial point and may calculate an LLR for the initial point based on the number of constellation points (e.g., K). According to an embodiment, the LLR calculator 225 may calculate an LLR based on MAX-LOG-MAP. However, the present disclosure is not limited in this regard. The LLR calculator 225 may calculate an LLR and the calculation of the LLR may be represented as an equation similar to Equation 5.

$$LLR\left(b_{m,k}\right) \approx \log\left(\frac{\max_{x_{m,k}\in\left(C^M\right)^+_{m,k}} \exp\left(-\frac{\left\|y-Hx_{m,k}\right\|^2}{2\sigma^2}\right)}{\max_{x_{m,k}\in\left(C^M\right)^-_{m,k}} \exp\left(-\frac{\left\|y-Hx_{m,k}\right\|^2}{2\sigma^2}\right)}\right)$$ [Equation 5]

$$= \frac{1}{2\sigma^2}\left(\min_{x_{m,k}\in\left(C^M\right)^-_{m,k}}\left\|y-Hx_{m,k}\right\|^2 - \min_{x_{m,k}\in\left(C^M\right)^+_{m,k}}\left\|y-Hx_{m,k}\right\|^2\right)$$

Referring to Equation 5, $b_{m,k}$ may refer to a k-th bit (where k is a positive integer greater than zero (0)) of a symbol transmitted from an m-th transmission antenna (or an m-th transmission layer, where m is a positive integer from one (1) to M). In addition, $\left(C^M\right)^+_{m,k}$ may represent a set of transmission signal vectors having a $b_{m,k}$ of '+1' in $C^M$ that is a universal set of signal vectors transmitted by a transmitter (e.g., transmitter 100 of FIG. 1), and $\left(C^M\right)^-_{m,k}$ may represent a set of transmission signal vectors having a $b_{m,k}$ of '-1' in $C^M$ that is the universal set of signal vectors transmitted by the transmitter 100. For example, when $b_{m,k}$ has '+1', $b_{m,k}$ may be a bit '0', and when $b_{m,k}$ has '-1', $b_{m,k}$ may be a bit '1'. The LLR calculator 225 may calculate an LLR based on K candidates instead of searching (or calculating an Euclidean distance) for all constellation point combinations. However, the complexity and power consumption of calculation may increase along with an increase in K, and performance deterioration may occur along with a decrease in K.

According to an embodiment, the low power consumption LLR calculation module 221 may calculate an LLR by using the number of constellation points (e.g., K), which may be adaptively determined according to an SIR, instead of using a fixed specific number of constellation points (e.g., K), thereby potentially reducing and/or preventing performance deterioration and simultaneously reducing the complexity of LLR calculation, when compared to a related receiver.

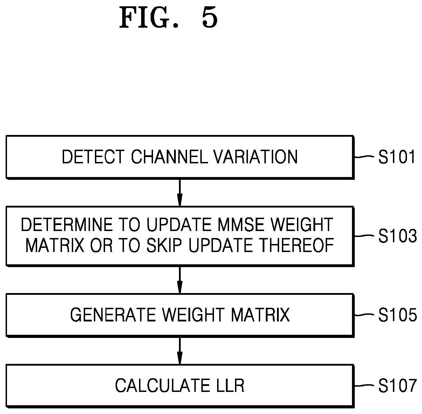

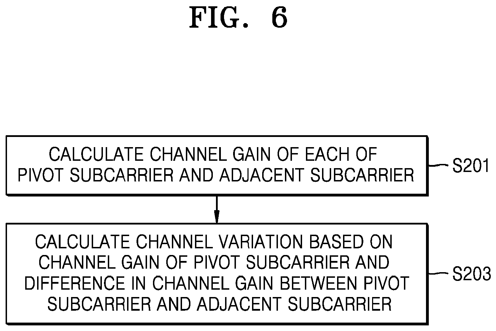

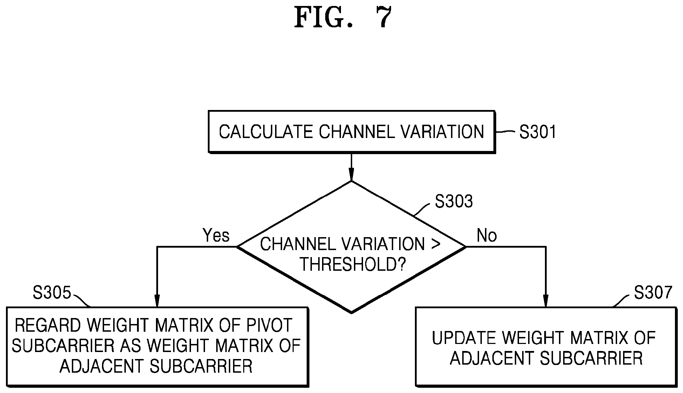

FIG. 5 illustrates an operation procedure, performed by a wireless communication device, of calculating an LLR, according to an embodiment. FIG. 6 illustrates an operation procedure, performed by a wireless communication device, of calculating a power variation of a reception signal, according to an embodiment. FIG. 7 illustrates an operation procedure, performed by a wireless communication device, of determining whether to update a weight matrix of a subcarrier, based on a signal power variation, according to an embodiment. FIGS. 5 to 7 may be described with reference to FIGS. 1 to 4 described above, and repeated descriptions may be omitted for the sake of brevity.

Referring to FIG. 5, in operation S101, the wireless communication device 200a may detect a channel variation. The channel variation is described with reference to FIG. 6.

According to an embodiment, the wireless communication device 200a may detect a channel variation based on Equation 6. In operation S201, the wireless communication device 200a may calculate a channel gain for each of a pivot subcarrier and an adjacent subcarrier. In operation S203, the wireless communication device 200a may calculate the channel variation based on a difference between the channel gain of the pivot subcarrier and the channel gain of the adjacent subcarrier. The channel variation may be represented as an equation similar to Equation 6.

$$h_{diff,i} = \frac{\left|h_{pivot+i}\right|^2}{\left|h_{pivot} - h_{pivot+i}\right|^2}$$ [Equation 6]

Referring to Equation 6, $h_{diff,i}$ may represent a channel variation between the pivot subcarrier and the adjacent subcarrier. That is, $h_{diff,i}$ may represent a channel variation between the pivot subcarrier and the adjacent subcarrier having a difference of i in index from the pivot subcarrier. The adjacent subcarrier may have a difference in subcarrier index by as much as i from the pivot subcarrier. The pivot subcarrier may refer to a subcarrier having an updated weight matrix. The square of the magnitude of $h_{pivot}$ may refer to a signal power for the pivot subcarrier. $h_{pivot}$ may have a complex value and may refer to a channel gain between a transmission antenna (e.g., a transmission antenna 102 of FIG. 1) and a reception antenna (e.g., a reception antenna 202 of FIG. 1) for the pivot subcarrier. For ease of description, respective indices of the transmission antenna and the reception antenna may be omitted. According to an embodiment, $h_{diff,i}$ may be calculated based on channels between all transmission and reception antennas. For instance, $h_{diff,i}$ may be calculated for each of the channels. According to another embodiment, $h_{diff,i}$ may be calculated based on channels between some transmission antennas and some reception antennas. For instance, $h_{diff,i}$ may be calculated for each of some of the channels. $h_{pivot+i}$ may refer to a subcarrier having a difference of i in subcarrier index from the pivot subcarrier.

Although $h_{pivot+i}$ is expressed as being arranged in the numerator in Equation 6, the channel variation between the pivot subcarrier and the adjacent subcarrier is not limited to Equation 6 and may be variously expressed based on $h_{pivot}$ and $h_{pivot+i}$. For example, the numerator and the denominator in Equation 6 may be exchanged with each other. If the numerator and denominator are swapped, then the channel variation would be represented as

$$h_{diff,i} = \frac{\left|h_{pivot} - h_{pivot+i}\right|^2}{\left|h_{pivot+i}\right|^2} \qquad \text{[Equation 6b]}$$

Hereinafter, for convenience of description, it may be assumed that the channel variation between the pivot subcarrier and the adjacent subcarrier corresponds to that in the case of Equation 6. In these embodiments, the weight matrix may be shared between subcarriers if the channel variation is greater than a threshold (based on channel variation being calculated based on Equation 6), and the weight matrix would be recalculated if the channel variation is less than or equal to the threshold. If the channel variation is calculated based on Equation 6b, then the "greater than" and "less than" tests relating to the channel variation in the following embodiments would be swapped. That is, if the channel variation is calculated based on Equation 6b, then the weight matrix may be shared between subcarriers if the channel variation is less than a threshold (based on channel variation being calculated based on Equation 6), and the weight matrix would be recalculated if the channel variation is greater than or equal to the threshold.

Referring again to FIG. 5, in operation S103, the wireless communication device 200a may determine to update an MMSE weight matrix or to skip an update thereof. Referring to Equation 6 related to FIG. 6, the difference in channel gain between the pivot subcarrier and the adjacent subcarrier may decrease along with an increase in the channel variation (e.g., $h_{diff,i}$).

According to an embodiment, the wireless communication device 200a may determine to update an MMSE weight matrix or to skip an update thereof, as shown on FIG. 7. Referring to FIG. 7, in operation S301, the wireless communication device 200a may calculate a channel variation. In operation S303, the wireless communication device 200a may compare the channel variation with a threshold. If the channel variation is greater than the threshold (Yes in operation S303), the wireless communication device 200a may determine a weight matrix of the pivot subcarrier as a weight matrix of the adjacent subcarrier in operation S305. In operation S307, when the channel variation is less than or equal to the threshold (No in operation S303), the wireless communication device 200a may determine to update the weight matrix for the adjacent subcarrier. According to an embodiment, the threshold may be determined based on a signal-to-noise ratio (SNR).

Referring again to FIG. 5, in operation S105, the wireless communication device 200a may generate a weight matrix. When the weight matrix of the pivot subcarrier is determined as the weight matrix of the adjacent subcarrier, the wireless communication device 200a may not need to calculate the weight matrix of the adjacent subcarrier. When the wireless communication device 200a determines to update the weight matrix for the adjacent subcarrier, the wireless communication device 200a may generate (and/or update) the weight matrix of the adjacent subcarrier. In addition, the adjacent subcarrier having an updated weight matrix may become a new pivot subcarrier.

In operation S107, the wireless communication device 200a may calculate an LLR.

Note that the embodiment of FIG. 7 assumes that channel variation is calculated based on Equation 6. If the channel variation is calculated based on Equation 6b, then the step S303 can be adapted to instead be a test of whether the channel variation is less than the threshold. If the channel variation is less than the threshold (Yes in operation S303), the wireless communication device 200a may determine a weight matrix of the pivot subcarrier as a weight matrix of the adjacent subcarrier in operation S305. In operation S307, when the channel variation is greater than or equal to the threshold (No in operation S303), the wireless communication device 200a may determine to update the weight matrix for the adjacent subcarrier.

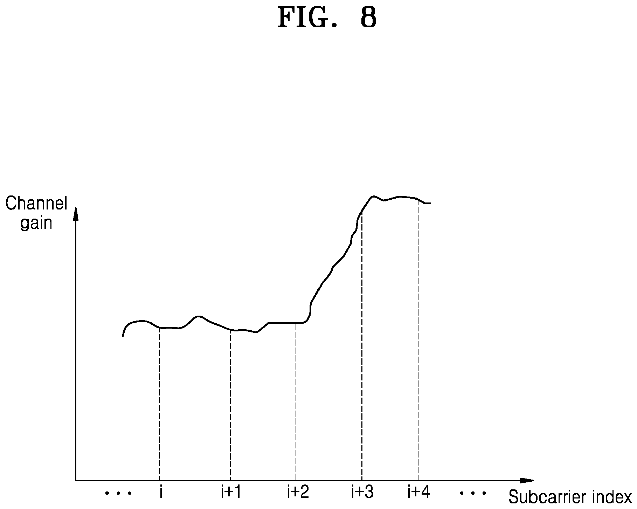

FIG. 8 is a diagram illustrating an embodiment in which an adjacent subcarrier having an updated weight matrix becomes a new pivot subcarrier. FIG. 8 may be described with reference to FIGS. 1 to 7 described above, and repeated descriptions may be omitted for the sake of brevity.

When the wireless communication device 200a determines to update a weight matrix for an adjacent subcarrier, the wireless communication device 200a may generate the weight matrix of the adjacent subcarrier. In addition, the adjacent subcarrier having an updated weight matrix may become a new pivot subcarrier.

Referring to FIG. 8, it may be assumed that an i-th subcarrier is a pivot subcarrier. An (i+1)-th subcarrier, an (i+2)-th subcarrier, and an (i+3)-th subcarrier may all be adjacent subcarriers. To determine whether to update a weight matrix for the (i+1)-th subcarrier, the wireless communication device 200a may take into account a channel variation between the i-th subcarrier and the (i+1)-th subcarrier. Referring to FIG. 8, because a channel difference between the i-th subcarrier and the (i+1)-th subcarrier is not large, a weight matrix of the (i+1)-th subcarrier may be determined as a weight matrix of the i-th subcarrier, which may have already been calculated. That is, the weight matrix of the (i+1)-th subcarrier may be set to be equal to the weight matrix of the i-th subcarrier. As another example, because a channel difference between the i-th subcarrier and the (i+2)-th subcarrier is not large, a weight matrix of the (i+2)-th subcarrier may be determined as the weight matrix of the i-th subcarrier, which may have already been calculated. Because a channel difference between the i-th subcarrier and the (i+3)-th subcarrier is large, the wireless communication device 200a may determine to calculate a weight matrix of the (i+3)-th subcarrier. Accordingly, the (i+3)-th subcarrier may be a new pivot subcarrier and, as a new pivot subcarrier, may be used to determine whether to update weight matrices of adjacent subcarriers (e.g., (i+4)-th subcarrier or the like).

Consequently, all subcarriers located between the previous pivot subcarrier and the next pivot subcarrier may have the same weight matrix as that of the previous pivot subcarrier.

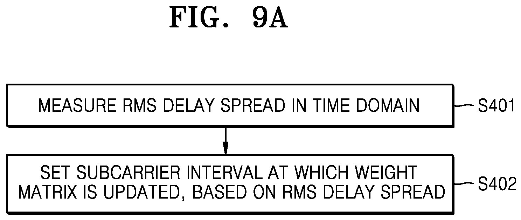

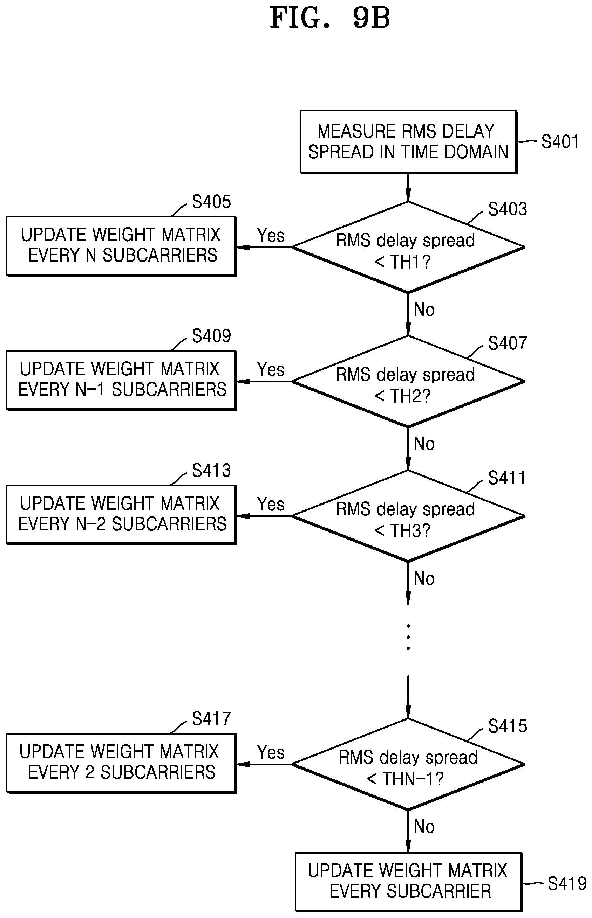

FIGS. 9A and 9B each illustrate an embodiment in which a wireless communication device may determine whether to update a weight matrix of a subcarrier in the time domain, according to an embodiment. FIGS. 9A and 9B may be described with reference to FIGS. 1 to 8 described above, and repeated descriptions may be omitted for the sake of brevity.

Referring to FIG. 9A, in operation S401, the wireless communication device 200a may measure an RMS delay spread in the time domain. The wireless communication device 200a may indirectly determine a channel variation between subcarriers in the frequency domain by measuring the RMS delay spread in the time domain. The wireless communication device 200a may determine that the channel variation between subcarriers is smaller as the RMS delay spread may be smaller.

A time-domain channel impulse may be represented as an equation similar to Equation 7.

$$g(t) = \sum_{l=0}^{L-1} \alpha_l \delta(t - \tau_l T_S)$$ [Equation 7]

Referring to Equation 7, L may represent the number of multi-paths of a channel impulse, $\alpha_l$ may represent a strength of an $l$-th impulse, $\tau_l$ may represent a delay of the $l$-th impulse, and $T_S$ may represent a sampling rate. The RMS delay spread may be represented as an equation similar to Equation 8.

$$\tau_{RMS} = \sqrt{\frac{\sum_{l=0}^{L-1}|\alpha_l|^2(\tau_l - \tau_{AVG})^2}{\sum_{l=0}^{L-1}|\alpha_l|^2}}$$ [Equation 8]

Referring to Equation 8, $\tau_{RMS}$ may represent the RMS delay spread, and $\tau_{AVG}$ may represent to an average delay. Equation 8 may be understood by referring to Equation 7. $\tau_{AVG}$ may be represented as an equation similar to Equation 9.

$$\tau_{AVG} = \left.\sum_{l=0}^{L-1}|\alpha_l|^2\tau_l \middle/ \sum_{l=0}^{L-1}|\alpha_l|^2\right.$$ [Equation 9]

Equation 9 may be understood by referring to Equations 7 and 8. A time-domain channel impulse of a static channel may be represented as an equation similar to Equation 10.

$$g(t) = \sum_{l=0}^{L-1} \alpha_l \delta(t - \tau_l T_S), L = 1$$ [Equation 10]

Equation 10 may be understood by referring to Equation 7.

Referring again to FIG. 9A, in operation S402, the wireless communication device 200a may set a subcarrier interval at which a weight matrix is updated, based on the RMS delay spread (e.g., $\tau_{RMS}$). For example, the wireless communication device 200a may set a subcarrier interval at which a weight matrix is updated, based on the RMS delay spread (e.g., $\tau_{RMS}$), a maximum delay spread, and/or an average delay (e.g., $\tau_{AVG}$ in Equation 9).

FIG. 9B illustrates an example in which the wireless communication device 200a determines a subcarrier interval for update by using an RMS delay spread (e.g., $\tau_{RMS}$). However, the present disclosure is not limited to the example of FIG. 9B.

Referring to FIG. 9B, operation S401 may include and/or may be similar in many respects to operation S401 described above with reference to FIG. 9A, and may include additional features not mentioned above. Consequently, repeated descriptions of the operation S401 described above with reference to FIG. 9A may be omitted for the sake of brevity.

In operation S403, the wireless communication device 200a may compare the RMS delay spread with a first threshold TH1.

In operation S405, when the RMS delay spread is less than the first threshold TH1 (Yes in operation S403), the wireless communication device 200a may update a weight matrix every N subcarriers. In operation S407, when the RMS delay spread is equal to or greater than the first threshold TH1 (No in operation S403), the wireless communication device 200a may compare the RMS delay spread with a second threshold TH2. In operation S409, when the RMS delay spread is less than the second threshold TH2 (Yes in operation S407), the wireless communication device 200a may update the weight matrix every N - 1 subcarriers. In operation S411, when the RMS delay spread is equal to or greater than the second threshold TH2 (No in operation S407), the wireless communication device 200a may compare the RMS delay spread with a third threshold TH3. In operation S413, when the RMS delay spread is less than the third threshold TH3 (Yes in operation S411), the wireless communication device 200a may update the weight matrix every N - 2 subcarriers. The wireless communication device 200a may repeat a procedure similar to the aforementioned operations for a fourth threshold to an (N - 1)-th threshold. In operation S415, when the RMS delay spread is equal to or greater than an (N - 2)-th threshold THN-2, the wireless communication device 200a may compare the RMS delay spread with an (N - 1)-th threshold THN-1. In operation S417, when the RMS delay spread is less than the (N - 1)-th threshold THN-1 (Yes in operation S415), the wireless communication device 200a may update the weight matrix every two (2) subcarriers (e.g., update the weight matrix for every other subcarrier). In operation S419, when the RMS delay spread is equal to or greater than the (N - 1)-th threshold THN-1 (No in operation S415), the wireless communication device 200a may update the weight matrix every one (1) subcarrier (e.g., update the weight matrix for every subcarrier). Each successive threshold may be larger than the previous threshold. For instance, the second threshold TH2 may be larger than the first threshold TN1, the third threshold TN3 may be larger than the second threshold, ...., and the (N - 1)-th threshold THN-1 may be larger than the (N - 2)-th threshold THN-2. Given this, the number of weight matrices calculated may increase for increasing RMS delay spread.

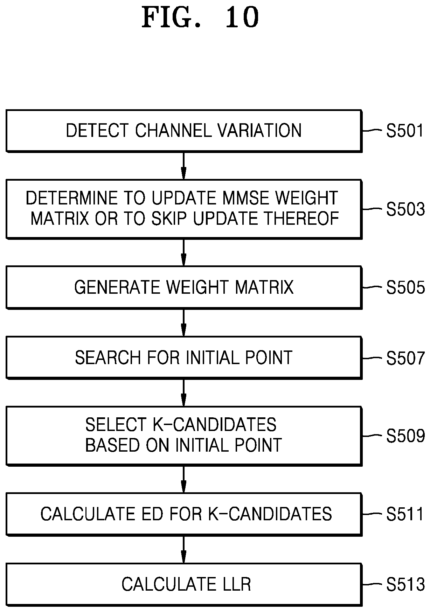

FIG. 10 illustrates an operation procedure, performed by a wireless communication device, of calculating an LLR, according to an embodiment. FIG. 10 may be described with reference to FIGS. 1 to 9B described above, and repeated descriptions may be omitted for the sake of brevity.

Referring to FIG. 10, in operation S501, the wireless communication device 200a may detect a channel variation. In operation S503, the wireless communication device 200a may determine to update an MMSE weight matrix or to skip an update of the MMSE weight matrix. In operation S505, the wireless communication device 200a may generate a weight matrix. Operations S501 to S505 may correspond to operations S101 to S105 of FIG. 5, and consequently, repeated descriptions thereof may be omitted for the sake of brevity.

In operation S507, the wireless communication device 200a may search for an initial point. In operation S509, the wireless communication device 200a may select K candidates based on the initial point. In operation S511, the wireless communication device 200a may calculate EDs for the K candidates. In operation S513, the wireless communication device 200a may calculate an LLR.

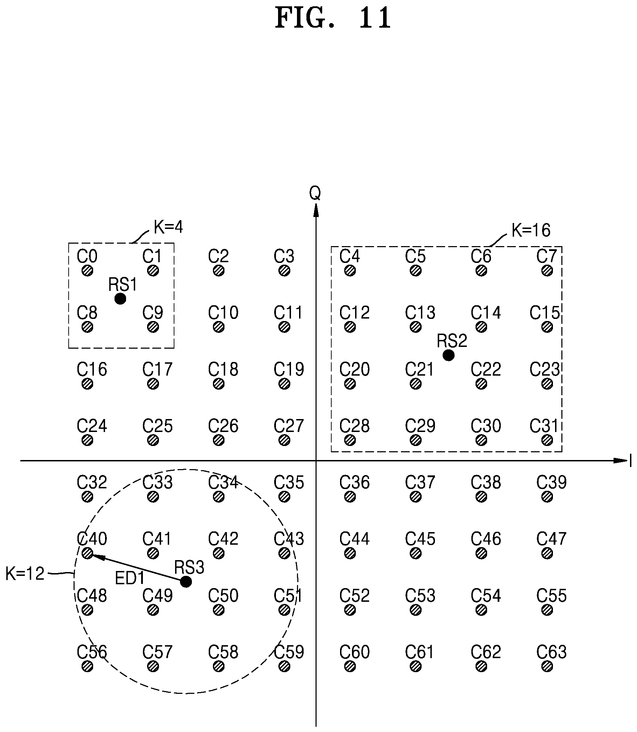

FIG. 11 is a diagram illustrating the number of constellation points used for LLR calculation, according to an embodiment.

FIG. 11 illustrates all of a plurality of constellation points (e.g., a first constellation point C0 to a sixty-fourth constellation point C63) corresponding to a modulation method (e.g., 64QAM) applied to a transmission signal. For convenience of description, although FIG. 11 illustrates the plurality of first to sixty-fourth constellation points C0 to C63 according to 64QAM, this is only an example, and the present disclosure is not limited thereto. For example, the modulation method may include, but not be limited to, at least one of QPSK, 16QAM, 256QAM, and 1024QAM.

Referring to FIG. 11, the number of constellation points selected in correspondence with a first reference symbol RS1 may be four (4) (e.g., K = 4). As described above, a reference symbol may refer to an initial point. The first reference symbol RS1 may be calculated based on a channel matrix (e.g., H of FIG. 3) and a linear detection matrix (e.g., W of FIG. 3). As used herein, the reference symbol may be referred to as an initial point.

Based on the number of constellation points (e.g., K = 4) selected in correspondence with the first reference symbol RS1, four (4) constellation points (e.g., the first constellation point C0, the second constellation point C1, the ninth constellation point C8, and the tenth constellation point C9) may be used to calculate an LLR for the first reference symbol RS1. For example, the selected constellation points may be constellation points adjacent to the reference symbol RS1. For example, the selected constellation points may be K closest constellation points to the reference symbol RS1.

Referring to FIG. 11, the number of constellation points selected in correspondence with a second reference symbol RS2 may be sixteen (16) (e.g., K = 16). Based on the number of constellation points (e.g., K = 16) selected in correspondence with the second reference symbol RS2, sixteen (16) constellation points (e.g., the fifth constellation point C4, the sixth constellation point C5, the seventh constellation point C6, the eighth constellation point C7, the thirteenth constellation point C12, the fourteenth constellation point C13, the fifteenth constellation point C14, the sixteenth constellation point C15, the twenty first constellation point C20, the twenty second constellation point C21, the twenty third constellation point C22, the twenty fourth constellation point C23, the twenty ninth constellation point C28, the thirtieth constellation point C29, the thirty first C30, and the thirty second C31) may be used to calculate an LLR for the second reference symbol RS2. For example, the selected constellation points may be constellation points adjacent to the reference symbol RS2. For example, the selected constellation points may be K closest constellation points to the reference symbol RS2.

Referring to FIG. 11, the number of constellation points selected in correspondence with a third reference symbol RS3 may be twelve (12) (e.g., K = 12). Based on the number of constellation points (e.g., K = 12) selected in correspondence with the third reference symbol RS3, twelve (12) constellation points (e.g., the thirty fourth constellation point C33, the thirty fifth constellation point C34, the forty first constellation point C40, the forty second constellation point C41, the forty third constellation point C42, the forty fourth constellation point C43, the forty ninth constellation point C48, the fiftieth constellation point C49, the fifty first constellation point C50, the fifty second constellation point C51, the fifty eighth constellation point C57, and the fifty ninth constellation point C58) may be used to calculate an LLR for the third reference symbol RS3. For example, the selected constellation points may be constellation points adjacent to the reference symbol RS3. For example, the selected constellation points may be K closest constellation points to the reference symbol RS3.

A constellation point adjacent to the reference symbol may be determined based on a Euclidean distance (ED) from the reference symbol. For example, the forty first constellation point C40 may be apart from the third reference symbol RS3 by as much as a first ED ED1. Therefore, K closest constellation points to the reference symbol in terms of Euclidean distance may be used to calculate an LLR for the reference symbol.

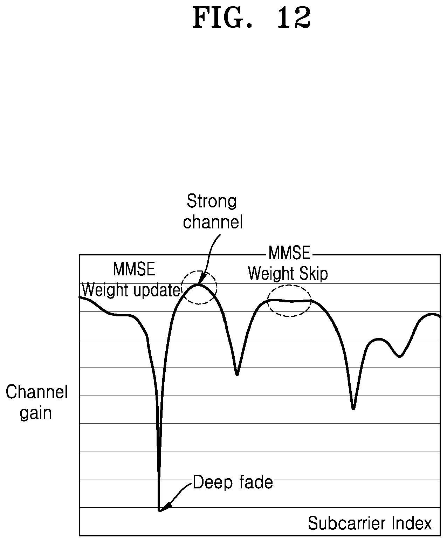

FIG. 12 is a diagram illustrating an operation of updating a weight matrix or skipping an update of the weight matrix. FIG. 12 may be described with reference to FIGS. 1 to 11 described above, and repeated descriptions may be omitted for the sake of brevity.

As shown in FIG. 12, the vertical axis may represent a channel gain, and the horizontal axis may represent a subcarrier index.

Referring to FIG. 12, there may be a deep fade (e.g. a relatively large drop in channel gain at a particular frequency). There may be a relatively large difference in channel gain between a subcarrier corresponding to the deep fade and a subcarrier next thereto. Therefore, an MMSE weight matrix may be updated for the next subcarrier. Because there is relatively small difference in signal power in the range of MMSE Weight Skip, an update of the MMSE weight matrix may be skipped.

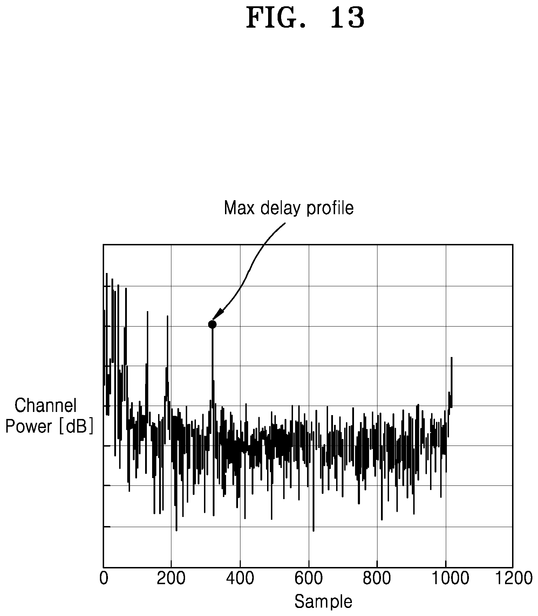

FIG. 13 illustrates an example of a channel impulse response in the time domain. FIG. 13 may be described with reference to FIGS. 1 to 12 described above, and repeated descriptions may be omitted for the sake of brevity.

As shown in FIG. 13, the vertical axis may represent channel power, and the horizontal axis may represent a sample.

Referring to FIG. 13, the last maximum delay spread may be located at a 320th sample (e.g., based on a 1024 Fast Fourier Transform (FFT) size).

As an RMS delay spread or a maximum delay spread increases, a channel variation between adjacent subcarriers in the frequency domain may increase. Therefore, the wireless communication device 200a may adjust a subcarrier interval for calculating a weight matrix by using the RMS delay spread and/or the maximum delay spread.

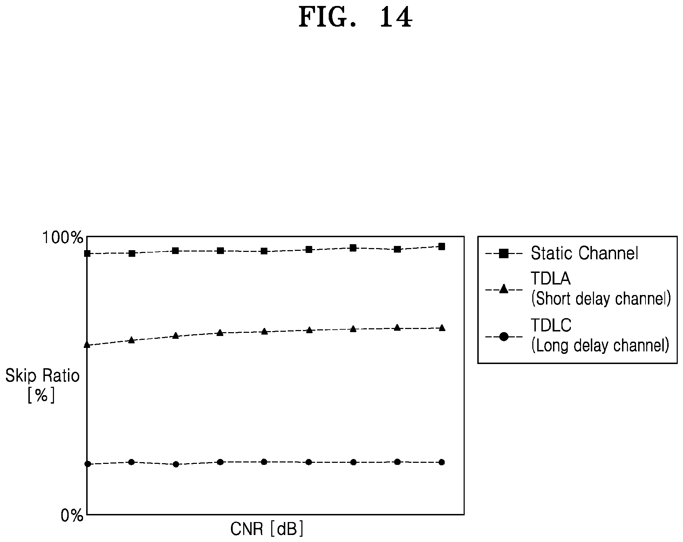

FIG. 14 illustrates a ratio of skipping, by a wireless communication device, the generation of an MMSE weight matrix, according to an embodiment. FIG. 14 may be described with reference to FIGS. 1 to 13 described above, and repeated descriptions may be omitted for the sake of brevity.

Referring to FIG. 14, the horizontal axis may represent a carrier-to-noise ratio (CNR), and the vertical axis may represent a skip ratio that is a ratio of skipping an MMSE weight matrix of a subcarrier.

In the case of a static channel, an update of the MMSE weight matrix of the subcarrier may be skipped at a relatively high probability. In the case of a short delay channel (e.g., TDLA), the skip ratio may be lower than that in the static channel. In the case of the short delay channel (e.g., TDLA), the wireless communication device 200a may have a skip ratio of 60 % or more.

In the case of a long delay channel (e.g., TDLC) having high frequency selectivity, the wireless communication device 200a may have a low skip ratio and need to more frequently perform an update of the MMSE weight matrix of the subcarrier.

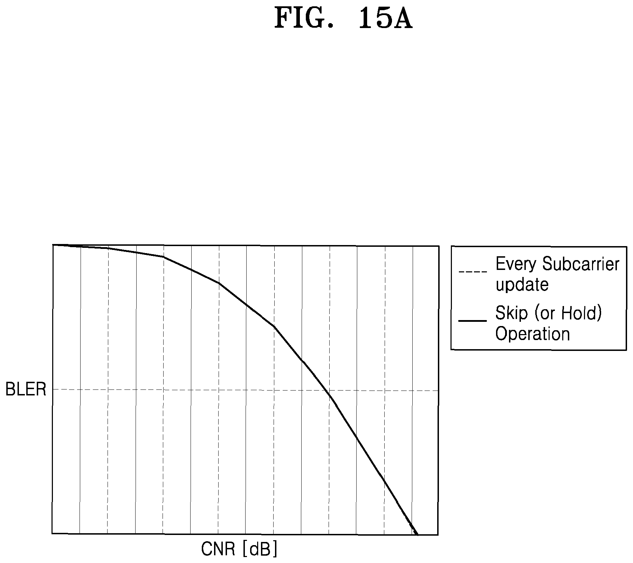

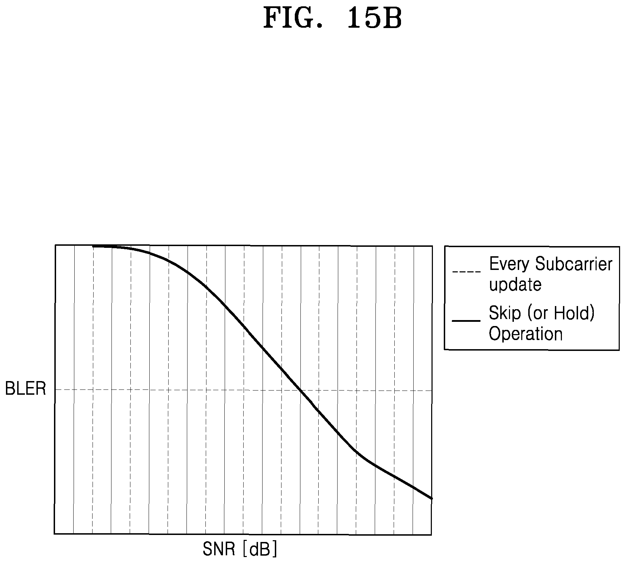

FIGS. 15A and 15B illustrate a BLER performance in which a wireless communication device, according to an embodiment, skips an update of a weight matrix according to a channel variation in the frequency domain.

FIGS. 15A and 15B may be described with reference to FIGS. 1 to 14 described above, and repeated descriptions may be omitted for the sake of brevity. Referring to FIGS. 15A and 15B, the horizontal axis may represent an CNR, and the vertical axis may represent a BLER.

FIG. 15A illustrates that, in the case of a TDLA channel having low frequency selectivity, a BLER when the wireless communication device 200a may update MMSE weight matrices of all subcarriers may be substantially similar to and/or the same as a BLER when the wireless communication device 200a updates MMSE weight matrices of some subcarriers (represented as a solid line in FIG. 15A), according to an embodiment.

FIG. 15B illustrates that, in the case of a TDLC channel having high frequency selectivity, a BLER when the wireless communication device 200a updates MMSE weight matrices of all subcarriers may be substantially similar to and/or the same as a BLER when the wireless communication device 200a updates MMSE weight matrices of some subcarriers (represented as a solid line in FIG. 15B), according to an embodiment.

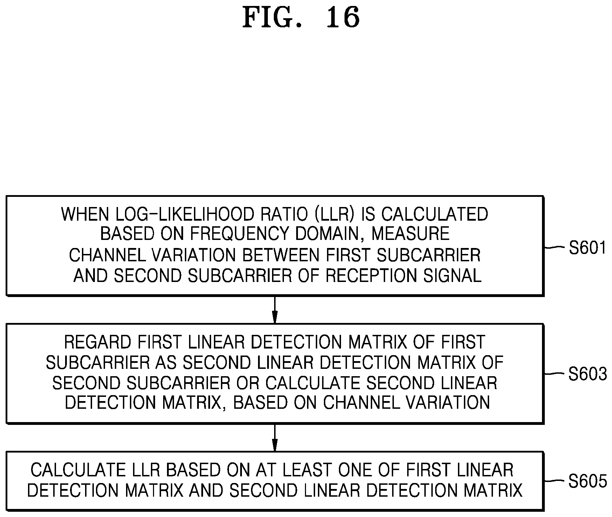

FIG. 16 illustrates an operation procedure, performed by a wireless communication device, of calculating an LLR, according to an embodiment.

Operations of FIG. 16 described below may be performed by a modem chip that may be included in the wireless communication device 200a.

In operation S601, when an LLR is calculated based on the frequency domain, the wireless communication device 200a may measure a channel variation between a first subcarrier and a second subcarrier of a reception signal.

In operation S603, the wireless communication device 200a may determine a first linear detection matrix of the first subcarrier as a second linear detection matrix of the second subcarrier and/or calculate the second linear detection matrix, based on the channel variation. In operation S605, the wireless communication device 200a may calculate the LLR based on at least one of the first linear detection matrix and the second linear detection matrix.

According to an embodiment, when the channel variation is greater than a threshold, the wireless communication device 200a may determine the first linear detection matrix of the first subcarrier as the second linear detection matrix of the second subcarrier. In addition, when the channel variation is greater than the threshold, the wireless communication device 200a may calculate the LLR based on the first linear detection matrix of both the first subcarrier and the second subcarrier. Each of the first linear detection matrix and the second linear detection matrix may include, but not be limited to, at least one of an MMSE weight matrix, a ZF weight matrix, or a QRD weight matrix.

According to an embodiment, when the channel variation is less than the threshold, the wireless communication device 200a may calculate the second linear detection matrix of the second subcarrier. In addition, when the channel variation is less than the threshold, the wireless communication device 200a may calculate the LLR based on the first linear detection matrix of the first subcarrier and the second linear detection matrix of the second subcarrier. When the channel variation is less than the threshold, the wireless communication device 200a calculates the second linear detection matrix of the second subcarrier, whereby the second subcarrier may become a new pivot subcarrier.

According to an embodiment, when the LLR is calculated based on the time domain, the wireless communication device 200a may measure an RMS delay spread of the reception signal. The wireless communication device 200a may compare the RMS delay spread with one or more thresholds. The wireless communication device 200a may calculate linear detection matrices every as many subcarriers as one number from among 1 to N, according to a comparison result. The wireless communication device 200a may calculate the LLR based on the calculated linear detection matrices. The RMS delay spread may include a maximum delay spread and/or an average delay. The linear detection matrices may each include, but not be limited to, at least one of an MMSE weight matrix, a ZF weight matrix, or a QRD weight matrix.

According to an embodiment, the wireless communication device 200a may search for an initial point, based on the linear detection matrices, in every subcarrier of the reception signal. The wireless communication device 200a may select K candidates based on the initial point. The wireless communication device 200a may calculate the LLR based on at least one of the EDs between the K candidates and the initial point.

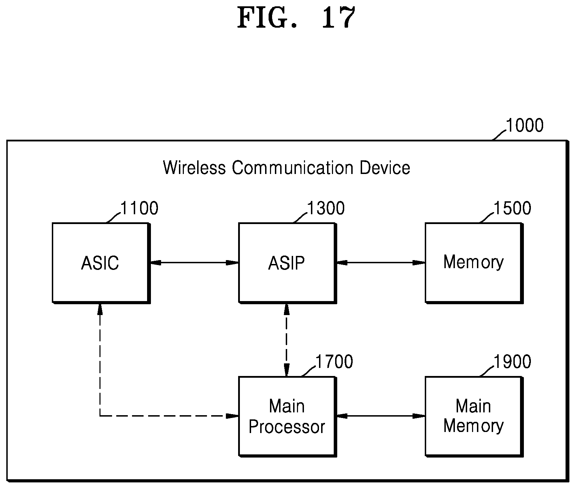

FIG. 17 is a block diagram illustrating a wireless communication device, according to an embodiment.

A wireless communication device 1000 of FIG. 17 may include and/or may be similar in many respects to the receiver 200 and the wireless communication device 200a described above with reference to FIGS. 1 and 2, and may include additional features not mentioned above. Consequently, repeated descriptions of the wireless communication device 1000 described above with reference to FIGS. 1 and 2 may be omitted for the sake of brevity.

Referring to FIG. 17, the wireless communication device 1000 may include an application-specific integrated circuit (ASIC) 1100, an application-specific instruction set processor (ASIP) 1300, a memory 1500, a main processor 1700, and a main memory 1900. At least two of the ASIC 1100, the ASIP 1300, and the main processor 1700 may communicate with each other. In addition, at least two of the ASIC 1100, the ASIP 1300, the memory 1500, the main processor 1700, and the main memory 1900 may be embedded in a single chip. For example, as described above, at least two of the ASIC 1100, the ASIP 1300, the memory 1500, the main processor 1700, and the main memory 1900 may be included in a single modem chip.

In addition, the ASIC 1100, the ASIP 1300, and/or the main processor 1700 may include and/or may be similar in many respects to the processor 220 described above with reference to FIG. 2, and may include additional features not mentioned above. Furthermore, the memory 1500 and/or the main memory 1900 may include and/or may be similar in many respects to the memory 230 described above with reference to FIG. 2, and may include additional features not mentioned above. Consequently, repeated descriptions of the ASIC 1100, the ASIP 1300, the main processor 1700, the memory 1500, and/or the main memory 1900 described above with reference to FIG. 2 may be omitted for the sake of brevity.

The ASIP 1300, which may be an integrated circuit customized for a particular use, may support a dedicated instruction set for a particular application and may execute instructions that are included in the instruction set. The memory 1500 may communicate with the ASIP 1300 and, as a non-transitory storage device, may store a plurality of instructions executed by the ASIP 1300. For example, the memory 1500 may include, as non-limiting examples, any type of memory capable of being accessed by the ASIP 1300, such as, but not limited to, random-access memory (RAM), read-only memory (ROM), tape, a magnetic disk, an optical disk, volatile memory, nonvolatile memory, and a combination thereof.

The main processor 1700 may control the wireless communication device 1000 by executing a plurality of instructions. For example, the main processor 1700 may control the ASIC 1100 and/or the ASIP 1300 and may process received data or process a user input to the wireless communication device 1000. The main memory 1900 may communicate with the main processor 1700 and, as a non-transitory storage device, may store a plurality of instructions executed by the main processor 1700. For example, the main memory 1900 may include, as non-limiting examples, any type of memory capable of being accessed by the main processor 1700, such as, but not limited to, RAM, ROM, tape, a magnetic disk, an optical disk, volatile memory, nonvolatile memory, and a combination thereof.

The wireless communication device and the operation method of the wireless communication device, which are described with reference to FIGS. 1 to 16, according to an embodiment, may be implemented or performed by at least one of the components of the wireless communication device 1000 of FIG. 17. In some embodiments, at least one operation of the aforementioned operation method of the wireless communication device may be implemented as a plurality of instructions stored in the memory 1500. In some embodiments, the ASIP 1300 may execute a plurality of instructions stored in the memory 1500, thereby performing at least one of the operations of the aforementioned operation method.

According to an embodiment there is provided an operation method of a wireless communication device further comprising: searching each subcarrier of the plurality of subcarriers for an initial point based on a corresponding linear detection matrix; selecting one or more candidate points based on the initial point; and calculating the first LLR based on at least one of Euclidean distances between the one or more candidate points and the initial point.

According to an embodiment, in the wireless communication device, the RMS delay spread comprises a maximum delay spread.

According to an embodiment, in the wireless communication device, the instructions, when executed by the one or more processors individually or collectively, further cause the wireless communication device to: calculate a second LLR based on a frequency domain, wherein the calculation of the second LLR comprises to: measure a channel variation between the first subcarrier and the second subcarrier; determine a second linear detection matrix of the second subcarrier, based on the channel variation; and calculate the second LLR based on at least one of a first linear detection matrix of the first subcarrier and the second linear detection matrix, and wherein the first subcarrier is a pivot subcarrier.

According to an embodiment, in the wireless communication device, the instructions, when executed by the one or more processors individually or collectively, further cause the wireless communication device to: based on the channel variation being greater than a threshold, determine the first linear detection matrix as the second linear detection matrix.

According to an embodiment, in the wireless communication device, the instructions, when executed by the one or more processors individually or collectively, further cause the wireless communication device to: based on the channel variation being greater than the threshold, calculate the second LLR based on the first linear detection matrix.

According to an embodiment, in the wireless communication device, the instructions, when executed by the one or more processors individually or collectively, further cause the wireless communication device to: based on the channel variation being less than a threshold, update the second linear detection matrix.

According to an embodiment, in the wireless communication device, the instructions, when executed by the one or more processors individually or collectively, further cause the wireless communication device to: based on the channel variation being less than the threshold, calculate the second LLR based on the first linear detection matrix and the second linear detection matrix.

According to an embodiment, in the wireless communication device, the instructions, when executed by the one or more processors individually or collectively, further cause the wireless communication device to: based on the channel variation being less than the threshold, set the second subcarrier as a new pivot subcarrier, and calculate the second linear detection matrix based on the new pivot subcarrier.

According to an embodiment, in the wireless communication device, the linear detection matrix of each subcarrier of the plurality of subcarriers comprises at least one of a minimum mean square error (MMSE) weight matrix, a zero forcing (ZF) weight matrix, or a QR decomposition (QRD) weight matrix.

According to an embodiment, in the wireless communication device, the instructions, when executed by the one or more processors individually or collectively, further cause the wireless communication device to: search each subcarrier of the plurality of subcarriers for an initial point based on a corresponding linear detection matrix; select one or more candidate points based on the initial point; and calculate the first LLR based on at least one of Euclidean distances between the one or more candidate points and the initial point.

Embodiments are set out in the following Clauses:

Clause 1. A wireless communication device, comprising:

a radio-frequency integrated circuit (RFIC);

one or more processors comprising processing circuitry; and
a memory storing instructions,
wherein the instructions, when executed by the one or more processors individually or collectively, cause the wireless communication device to:

receive, via the RFIC, a reception signal comprising a plurality of subcarriers, the plurality of subcarriers comprising a first subcarrier and a second subcarrier adjacent to the first subcarrier;
calculate a first log-likelihood ratio (LLR) based on a frequency domain; and
decode the reception signal using the first LLR,

wherein the calculation of the first LLR comprises to:

measure a channel variation between the first subcarrier and the second subcarrier;
determine a second linear detection matrix of the second subcarrier, based on the channel variation;
calculate the first LLR based on at least one of a first linear detection matrix of the first subcarrier and the second linear detection matrix, and

wherein the first subcarrier is a pivot subcarrier.

Clause 2. The wireless communication device of Clause 1, wherein the instructions, when executed by the one or more processors individually or collectively, further cause the wireless communication device to:
based on the channel variation being less than a threshold, determine the first linear detection matrix as the second linear detection matrix.

Clause 3. The wireless communication device of Clause 2, wherein the instructions, when executed by the one or more processors individually or collectively, further cause the wireless communication device to:
based on the channel variation being less than the threshold, calculate the first LLR based on the first linear detection matrix.

Clause 4. The wireless communication device of any preceding Clause, wherein the instructions, when executed by the one or more processors individually or collectively, further cause the wireless communication device to:
based on the channel variation being greater than a threshold, update the second linear detection matrix.

Clause 5. The wireless communication device of Clause 4, wherein the instructions, when executed by the one or more processors individually or collectively, further cause the wireless communication device to:
based on the channel variation being greater than the threshold, calculate the first LLR based on the first linear detection matrix and the second linear detection matrix.

Clause 6. The wireless communication device of Clause 4 or Clause 5, wherein the instructions, when executed by the one or more processors individually or collectively, further cause the wireless communication device to:
based on the channel variation being greater than the threshold, set the second subcarrier as a new pivot subcarrier, and calculate the second linear detection matrix based on the new pivot subcarrier.

Clause 7. The wireless communication device of any preceding Clause, wherein the instructions, when executed by the one or more processors individually or collectively, further cause the wireless communication device to:

calculate a second LLR based on a time domain, and
wherein the calculation of the second LLR comprises to:

measure a root mean square (RMS) delay spread of the reception signal;
compare the RMS delay spread with one or more thresholds;
calculate linear detection matrices every N subcarriers, based on a result of the comparison, N being a positive integer greater than zero (0); and
calculate the second LLR based on the linear detection matrices of the plurality of subcarriers.

Clause 8. The wireless communication device of Clause 7, wherein the RMS delay spread comprises a maximum delay spread and an average delay.

Clause 9. The wireless communication device of any preceding Clause, wherein a linear detection matrix of each subcarrier of the plurality of subcarriers comprises at least one of a minimum mean square error (MMSE) weight matrix, a zero forcing (ZF) weight matrix, or a QR decomposition (QRD) weight matrix.

Clause 10. The wireless communication device of any preceding Clause, wherein the instructions, when executed by the one or more processors individually or collectively, further cause the wireless communication device to:

search each subcarrier of the plurality of subcarriers for an initial point based on a corresponding linear detection matrix;
select one or more candidate points based on the initial point; and
calculate the first LLR based on at least one of Euclidean distances between the one or more candidate points and the initial point.

Clause 11. An operation method of a wireless communication device, the operation method comprising:

receiving a reception signal comprising a plurality of subcarriers, the plurality of subcarriers comprising a first subcarrier and a second subcarrier adjacent to the first subcarrier;
calculating a first log-likelihood ratio (LLR) being based on a frequency domain; and
decoding the reception signal using the first LLR,
wherein the calculating of the first LLR comprises:

measuring a channel variation between the first subcarrier and the second subcarrier;
determining a second linear detection matrix of the second subcarrier;
calculating the first LLR based on at least one of a first linear detection matrix of the first subcarrier and the second linear detection matrix; and
decoding the reception signal using the first LLR, and

wherein the first subcarrier is a pivot subcarrier.

Clause 12. The operation method of Clause 11, wherein the determining of the second linear detection matrix comprises:
based on the channel variation being less than a threshold, determining the first linear detection matrix as the second linear detection matrix.

Clause 13. The operation method of Clause 12, wherein the calculating of the first LLR comprises:
based on the channel variation being less than the threshold, calculating the first LLR based on the first linear detection matrix.

Clause 14. The operation method of any of Clauses 11-13, wherein the determining of the second linear detection matrix of the second subcarrier comprises:
based on the channel variation being greater than a threshold, updating the second linear detection matrix of the second subcarrier.

Clause 15. The operation method of any of Clauses 11-14, further comprising:

calculating a second LLR based on a time domain,
wherein the calculating of the second LLR comprises:

measuring a root mean square (RMS) delay spread of the reception signal;
comparing the RMS delay spread with one or more thresholds;
calculating linear detection matrices every N subcarriers, based on the comparing, N being a positive integer greater than zero (0); and
calculating the second LLR based on the linear detection matrices of the plurality of subcarriers.

While the present disclosure has been particularly shown and described with reference to embodiments thereof, it is to be understood that various changes in form and details may be made therein without departing from the scope of the following claims.

**Claims**

1.  A wireless communication device, comprising:

    a radio-frequency integrated circuit, RFIC, (210);
    one or more processors (220) comprising processing circuitry; and
    a memory (230) storing instructions,
    wherein the instructions, when executed by the one or more processors (220) individually or collectively, cause the wireless communication device to:

        receive, via the RFIC (210), a reception signal comprising a plurality of subcarriers, the plurality of subcarriers comprising a first subcarrier and a second subcarrier adjacent to the first subcarrier;
        calculate a first log-likelihood ratio, LLR, based on a frequency domain; and
        decode the reception signal using the first LLR,

    wherein the calculation of the first LLR comprises:

        measuring a channel variation (S101) between the first subcarrier and the second subcarrier;
        determining a second linear detection matrix of the second subcarrier (S105), based on the channel variation; and
        calculating the first LLR (107) based on at least one of a first linear detection matrix of the first subcarrier and the second linear detection matrix, and

    wherein the first subcarrier is a pivot subcarrier.

2.  The wireless communication device of claim 1, wherein the instructions, when executed by the one or more processors (220) individually or collectively, further cause the wireless communication device to:
    based on the channel variation being greater than a threshold, determine the first linear detection matrix as the second linear detection matrix (S305).

3.  The wireless communication device of claim 2, wherein the instructions, when executed by the one or more processors (220) individually or collectively, further cause the wireless communication device to:
    based on the channel variation being greater than the threshold, calculate the first LLR based on the first linear detection matrix.

4.  The wireless communication device of any preceding claim, wherein the instructions, when executed by the one or more processors (220) individually or collectively, further cause the wireless communication device to:
    based on the channel variation being less than a threshold, update the second linear detection matrix (S307).

5.  The wireless communication device of claim 4, wherein the instructions, when executed by the one or more processors (220) individually or collectively, further cause the wireless communication device to:
    based on the channel variation being less than the threshold, calculate the first LLR based on the first linear detection matrix and the second linear detection matrix.

6.  The wireless communication device of claim 4 or claim 5, wherein the instructions, when executed by the one or more processors (220) individually or collectively, further cause the wireless communication device to:
    based on the channel variation being less than the threshold, set the second subcarrier as a new pivot subcarrier, and calculate the second linear detection matrix based on the new pivot subcarrier.

7.  The wireless communication device of any preceding claim, wherein the instructions, when executed by the one or more processors (220) individually or collectively, further cause the wireless communication device to:

    calculate a second LLR based on a time domain, and
    wherein the calculation of the second LLR comprises:

        measuring a root mean square, RMS, delay spread of the reception signal (S401);
        comparing the RMS delay spread with one or more thresholds (403, S407, S411, S415);
        calculating linear detection matrices every N subcarriers (S405, S409, S413, S417, S419), based on a result of the comparison, N being a positive integer greater than zero; and
calculating the second LLR based on the linear detection matrices of the plurality of subcarriers.

8. The wireless communication device of claim 7, wherein the RMS delay spread comprises one or both of a maximum delay spread and an average delay.

9. The wireless communication device of any preceding claim, wherein a linear detection matrix of each subcarrier of the plurality of subcarriers comprises at least one of a minimum mean square error weight matrix, a zero forcing weight matrix, or a QR decomposition weight matrix.

10. The wireless communication device of any preceding claim, wherein the instructions, when executed by the one or more processors (220) individually or collectively, further cause the wireless communication device to:

   search each subcarrier of the plurality of subcarriers for an initial point (S507) based on a corresponding linear detection matrix;
   select one or more candidate points (S509) based on the initial point; and
   calculate the first LLR (S513) based on at least one of Euclidean distances between the one or more candidate points and the initial point.

11. An operation method of a wireless communication device, the operation method comprising:

   receiving a reception signal comprising a plurality of subcarriers, the plurality of subcarriers comprising a first subcarrier and a second subcarrier adjacent to the first subcarrier;
   calculating a first log-likelihood ratio, LLR, being based on a frequency domain; and
   decoding the reception signal using the first LLR,
   wherein the calculating of the first LLR comprises:

      measuring a channel variation (S101) between the first subcarrier and the second subcarrier;
      determining a second linear detection matrix of the second subcarrier (S105); and
      calculating the first LLR (S107) based on at least one of a first linear detection matrix of the first subcarrier and the second linear detection matrix; and

      wherein the first subcarrier is a pivot subcarrier.

12. The operation method of claim 11, wherein the determining of the second linear detection matrix (S105) comprises:
   based on the channel variation being greater than a threshold, determining the first linear detection matrix as the second linear detection matrix (S305).

13. The operation method of claim 12, wherein the calculating of the first LLR comprises:
   based on the channel variation being greater than the threshold, calculating the first LLR based on the first linear detection matrix.

14. The operation method of any of claims 11-13, wherein the determining of the second linear detection matrix of the second subcarrier comprises:
   based on the channel variation being less than a threshold, updating the second linear detection matrix of the second subcarrier (S307).

15. The operation method of any of claims 11-14, further comprising:

   calculating a second LLR based on a time domain,
   wherein the calculating of the second LLR comprises:

      measuring a root mean square, RMS, delay spread of the reception signal (S401);
      comparing the RMS delay spread with one or more thresholds (403, S407, S411, S415);
      calculating linear detection matrices every N subcarriers (S405, S409, S413, S417, S419), based on the comparing, N being a positive integer greater than zero (0);
      and
      calculating the second LLR based on the linear detection matrices of the plurality of subcarriers.

# FIG. 1

# FIG. 2

# FIG. 3

# FIG. 4

Block diagram (221a):

Channel variation calculator (222) → Weight matrix update controller (223) → Weight matrix generator (224) — Z → Initial point search module (226) → K-Candidates selector (227) → ED calculator (228) → LLR calculator (225)

H → Weight matrix generator (224)

EP 4 716 163 A2

# FIG. 5

| | |
|---|---|
| DETECT CHANNEL VARIATION | — S101 |

↓

| | |
|---|---|
| DETERMINE TO UPDATE MMSE WEIGHT MATRIX OR TO SKIP UPDATE THEREOF | — S103 |

↓

| | |
|---|---|
| GENERATE WEIGHT MATRIX | — S105 |

↓

| | |
|---|---|
| CALCULATE LLR | — S107 |

# FIG. 6

```
CALCULATE CHANNEL GAIN OF EACH OF
PIVOT SUBCARRIER AND ADJACENT SUBCARRIER        ⌐ S201

                    ↓

CALCULATE CHANNEL VARIATION BASED ON
CHANNEL GAIN OF PIVOT SUBCARRIER AND
DIFFERENCE IN CHANNEL GAIN BETWEEN PIVOT        ⌐ S203
SUBCARRIER AND ADJACENT SUBCARRIER
```

# FIG. 7

CALCULATE CHANNEL VARIATION — S301

S303

Yes ← CHANNEL VARIATION > THRESHOLD? → No

S305
REGARD WEIGHT MATRIX OF PIVOT SUBCARRIER AS WEIGHT MATRIX OF ADJACENT SUBCARRIER

S307
UPDATE WEIGHT MATRIX OF ADJACENT SUBCARRIER

# FIG. 8

Channel gain

Subcarrier index

··· i    i+1    i+2    i+3    i+4    ···

# FIG. 9A

| MEASURE RMS DELAY SPREAD IN TIME DOMAIN | ~ S401 |

| SET SUBCARRIER INTERVAL AT WHICH WEIGHT MATRIX IS UPDATED, BASED ON RMS DELAY SPREAD | ~ S402 |

# FIG. 9B

```
                                    ┌──────────────────────┐
                                    │  MEASURE RMS DELAY   │── S401
                                    │  SPREAD IN TIME DOMAIN│
                                    └──────────────────────┘
                                              │
          ┌─────────────────────┐         ╱──────────╲  ── S403
   S405 ──│ UPDATE WEIGHT MATRIX │◄─ Yes ─│ RMS delay  │
          │ EVERY N SUBCARRIERS  │         │ spread     │
          └─────────────────────┘         │  < TH1?    │
                                           ╲──────────╱
                                              │ No
                                              ▼
          ┌─────────────────────┐         ╱──────────╲  ── S407
   S409 ──│ UPDATE WEIGHT MATRIX │◄─ Yes ─│ RMS delay  │
          │ EVERY N-1 SUBCARRIERS│         │ spread     │
          └─────────────────────┘         │  < TH2?    │
                                           ╲──────────╱
                                              │ No
                                              ▼
          ┌─────────────────────┐         ╱──────────╲  ── S411
   S413 ──│ UPDATE WEIGHT MATRIX │◄─ Yes ─│ RMS delay  │
          │ EVERY N-2 SUBCARRIERS│         │ spread     │
          └─────────────────────┘         │  < TH3?    │
                                           ╲──────────╱
                                              │ No
                                              ⋮
                                              ▼
          ┌─────────────────────┐         ╱──────────╲  ── S415
   S417 ──│ UPDATE WEIGHT MATRIX │◄─ Yes ─│ RMS delay  │
          │ EVERY 2 SUBCARRIERS  │         │ spread     │
          └─────────────────────┘         │  < THN-1?  │
                                           ╲──────────╱
                                              │ No
                                              ▼
                                    ┌──────────────────────┐
                                    │  UPDATE WEIGHT MATRIX │── S419
                                    │  EVERY SUBCARRIER    │
                                    └──────────────────────┘
```

# FIG. 10

DETECT CHANNEL VARIATION — S501

DETERMINE TO UPDATE MMSE WEIGHT MATRIX OR TO SKIP UPDATE THEREOF — S503

GENERATE WEIGHT MATRIX — S505

SEARCH FOR INITIAL POINT — S507

SELECT K-CANDIDATES BASED ON INITIAL POINT — S509

CALCULATE ED FOR K-CANDIDATES — S511

CALCULATE LLR — S513

# FIG. 11

# FIG. 12

# FIG. 13

Max delay profile

Channel Power [dB]

Sample

# FIG. 14

# FIG. 15A

# FIG. 15B

# FIG. 16

WHEN LOG-LIKELIHOOD RATIO (LLR) IS CALCULATED
BASED ON FREQUENCY DOMAIN, MEASURE
CHANNEL VARIATION BETWEEN FIRST SUBCARRIER
AND SECOND SUBCARRIER OF RECEPTION SIGNAL — S601

REGARD FIRST LINEAR DETECTION MATRIX OF FIRST
SUBCARRIER AS SECOND LINEAR DETECTION MATRIX OF
SECOND SUBCARRIER OR CALCULATE SECOND LINEAR
DETECTION MATRIX, BASED ON CHANNEL VARIATION — S603

CALCULATE LLR BASED ON AT LEAST ONE OF FIRST LINEAR
DETECTION MATRIX AND SECOND LINEAR DETECTION MATRIX — S605

# FIG. 17

Wireless Communication Device _1000

ASIC _1100

ASIP _1300

Memory _1500

Main Processor _1700

Main Memory _1900